# EUROPÄISCHE PATENTSCHRIFT

(11) **EP 1 977 928 B1**
(45) Veröffentlichungstag und Bekanntmachung des Hinweises auf die Patenterteilung: **13.07.2011**
(21) Anmeldenummer: 07007138.6
(22) Anmeldetag: 05.04.2007
(51) Int. Cl.: B60Q 1/08

(54) **Verfahren zum Betreiben eines Scheinwerfersystems und Scheinwerfersystem**
Procedure for operating a headlamp system and a headlamp system
Procédé pour fonctionnement d'un système de projecteur et système de projecteur

(43) Veröffentlichungstag der Anmeldung: 08.10.2008
(73) Patentinhaber: GM Global Technology Operations, Inc., Detroit, MI 48265-3000 (US)
(72) Erfinder: Balzer, Dirk, 55283 Nierstein (DE); Kanning, Torsten, 65346 Eltville/Erbach (DE)
(74) Vertreter: Daniel, Ulrich W.P.

(56) Entgegenhaltungen:
- WO-A-2004/034183
- DE-A1- 10 002 602
- DE-A1-102004 033 347
- US-A1- 2003 117 808

## Beschreibung

Die Erfindung betrifft ein Verfahren zum Betreiben eines Scheinwerfersystems in einem Kraftfahrzeug und hier insbesondere in einem Personenkraftfahrzeug sowie ein solches Scheinwerfersystem.

Während bei früheren Kraftfahrzeugen die Frontscheinwerfer starr mit der Karosserie des Kraftfahrzeuges verbunden waren, weisen die meisten modernen Kraftfahrzeuge eine Verstelleinrichtung auf, mit welcher die Frontscheinwerfer innerhalb gewisser Grenzen verstellt werden können, beispielsweise abhängig von der Zuladung des Kraftfahrzeuges (Leuchtweitenregelung), dessen Fahrtrichtung (Kurvenlichtanpassung), etc. Insgesamt wird durch diese Systeme die Fahrsicherheit erhöht. Daneben existieren auch Scheinwerfersysteme, die die Einstellung der Scheinwerfer entsprechend der Fahrweise des Kraftfahrzeugführers anpassen sollen.

Ein solches Scheinwerfersystem, das über eine Verstelleinrichtung zum Verstellen der Scheinwerfer verfügt, ist zum Beispiel das so genannte AFL-Scheinwerfersystem, wobei AFL für "adaptive forward lighting" steht. Der Begriff AFL bezeichnet Frontscheinwerfer für Kraftfahrzeuge, deren Licht sich der jeweiligen Fahrsituation anpasst.

Solche AFL-Scheinwerfersysteme gibt es in einer Vielzahl unterschiedlicher Ausführungsformen und Varianten, die sich meist bei den verschieden Fahrzeugherstellern voneinander unterscheiden. Die Erfindung sowie die ihr zugrunde liegenden Problematik wird nachfolgend mit Bezug auf solche AFL-Scheinwerfersysteme beschrieben, ohne dadurch jedoch die Erfindung darauf zu beschränken.

Die derzeitige technologische Entwicklung von Scheinwerfersystemen beschäftigt sich zunehmend mit adaptiven, veränderlichen Scheinwerfersystemen, um z. B. verbesserte Sichtbedingungen auch in unterschiedlichen Fahrsituation zu erreichen. Die vorliegende Erfindung betrifft Scheinwerfersysteme, wie das AFL-Scheinwerfersystem, bei welchem Einrichtungen zum Verändern der Helligkeit und/oder des Ausleuchtungsbereichs vorgesehen sind, also so genannte adaptive Scheinwerfersysteme mit je nach Fahrtsituation und Helligkeitszustand veränderbaren Leuchtweiten und Leuchtrichtungen. Bei AFL-Scheinwerfersystemen wird beispielsweise mittels beweglicher Linsen im Scheinwerfer eine verbesserte Ausleuchtung der Kurven gegenüber normalen Scheinwerfern erreicht. Das Schwenken der Linsen wird von einem separaten Steuergerät gesteuert, welches aus Geschwindigkeit und Lenkwinkel den optimalen Schwenkwert für die Linsen errechnet. AFL-Scheinwerfersysteme werden typischerweise mit Xenonlicht oder alternativ auch mit Halogenlicht ausgestattet. Im Falle von Xenonlicht besteht der Vorteil darin, dass aus gesetzlichen Gründen Xenonscheinwerfer bereits mit einer kontinuierlichen automatischen Leuchtweitenregelung ausgestattet sein müssen und hierfür ein Steuergerät benötigt wird, welches im Falle eines AFL-Scheinwerfersystems lediglich in seiner Funktion erweitert werden muss. Als Zusatzfunktion von AFL-Scheinwerfersystemen kann ein spezielles Abbiegelicht vorgesehen sein, das so genannte "Cornering", welches bei niedrigen Geschwindigkeiten und einem Erreichen eines bestimmten Lenkwinkels und/oder der Betätigung eines Blinkers aktiviert werden kann.

Moderne Kraftfahrzeuge verfügen häufig über verschiedene Betriebsmodi. Solche Betriebsmodi können z. B. neben dem Normalbetrieb einen Sportmodus, einen Komfortmodus, etc. vorsehen. Beispielsweise im Sportmodus kann vorgesehen sein, dass die Brennkraftmaschine des Kraftfahrzeuges ein unmittelbareres und damit schnelleres Ansprechen vorsieht, ein Turbolader oder eine Turboladerstufe zugeschaltet wird, die Dämpfung der Stoßdämpfer härter eingestellt ist, das Fahrwerk härter abgestimmt ist, die Bremsen stärker greifen und dergleichen. Dieser Sportmodus lässt sich von dem Kraftfahrzeugführer bei Bedarf beispielsweise mittels eines Schalters oder eines Druckknopfes aktivieren. Beim Aktivieren dieses Betriebsmodus ist es wichtig, dass der Kraftfahrzeugführer zumindest eine erkennbare Änderung im Verhalten des Kraftfahrzeuges spürt. Dieses subjektive Empfinden setzt sich zusammen aus akustischen, optischen und sonstigen Wahrnehmungen.

Im Falle der optischen Wahrnehmung beim Zuschalten des Sportmodus besteht der Bedarf darin, dass der Kraftfahrzeugführer dieses Umschalten zumindest in einer Änderung der Wahrnehmung des von den Frontscheinwerfern ausgestrahlten Lichts erkennt. Erkennt er dies, dann wird ihm dieses Umschalten vom Normalbetrieb in einen Sportbetrieb in optischer Hinsicht sinnvoll vorkommen und er dies auch mit einem sportlichen Betrieb assoziieren.

Sind Kraftfahrzeuge mit einer Einrichtung zum Verstellen der Scheinwerfer ausgestattet, wie dies bei einem AFL-Scheinwerfersystem der Fall ist, kann dieses AFL-Scheinwerfersystem für das Umschalten in den Sportbetrieb mit einbezogen werden. Dabei werden für den Sportbetrieb die Scheinwerfer mittels der Verstelleinrichtung des AFL-Scheinwerfersystems so verändert, dass sich für den Kraftfahrzeugführer gewissermaßen ein "nervöses" Verhalten der Scheinwerfer erkennen lässt. Um dieses "nervöse" Verhalten der Scheinwerfer gewährleisten zu können, wird das Scheinwerfersystem so eingestellt, dass die Scheinwerfer unmittelbarer ansprechen. Dieses "nervöse" Verhalten der Scheinwerfer wird der Kraftfahrzeugführer unmittelbar mit einem sportlicheren, etwas aggressiveren Fahrverhalten, der dem Sportbetrieb inhärent ist, in Verbindung bringen.

Problematisch ist allerdings, dass es aus Ausleuchtungssicht der Scheinwerfer nicht empfehlenswert ist, ein großes Ansprechverhalten der Scheinwerfer einzustellen und damit die Reaktion der Scheinwerfer zu aggressiv zu gestalten, d. h. es besteht hier der Bedarf, dass die Scheinwerfer möglichst kein "nervöses" Verhalten zeigen.

Damit stehen sich zwei gegensätzlich entgegen gesetzte Forderungen gegenüber, nämlich einerseits das beispielsweise aus Marketing-technischen Gründen geforderte große Ansprechverhalten der Scheinwerfer und andererseits das aus Ausleuchtungssicht geforderte möglichst niedrige Ansprechverhalten der Scheinwerfer.

Aus DE 10 2004 033 A ist ein gattungsmäßiges Verfahren zum Betreiben eines Scheinwerfersystems bzw. ein gattungsmäßiges Scheinwerfersystem bekannt.

Es offenbart ein Verfahren zum Betreiben eines Scheinwerfersystems in einem Kraftfahrzeug gemäß den folgenden Merkmalen des unabhängigen Anspruchs 1:
(a) Bereitstellen eines Scheinwerfers, der in einem ersten Betriebsmodus mit einem ersten Ansprechverhalten und in einem zweiten Betriebsmodus mit einem gegenüber dem ersten Ansprechverhalten unterschiedlichen zweiten Ansprechverhalten betreibbar ist, wobei der Scheinwerfer in einer Ausgangsposition einen ersten Betriebsmodus aufweist;
(b) Umschalten von dem ersten Betriebsmodus in den zweiten Betriebsmodus, bei dem unmittelbar nach dem Umschalten das Ansprechverhalten beginnend von dem ersten Ansprechverhalten des erster Betriebsmodus über das zweite Ansprechverhalten des zweiten Betriebsmodus hinaus solange schnell verändert wird, bis ein drittes Ansprechverhalten erreicht ist.

DE 10 2004 033 A offenbart ferner auch die folgende Merkmale des dazugehörigen Scheinwerfersystems mit mindestens einem Scheinwerfer, der in einem ersten Betriebsmodus mit einem ersten Ansprechverhalten und in einem zweiten Betriebsmodus mit einem gegenüber dem ersten Ansprechverhalten unterschiedlichen zweiten Ansprechverhalten betreibbar ist,
- mit einer Umschalteinrichtung zum Einschalten und/oder Umschalten des Betriebsmodus,
- mit einer mit der Umschalteinrichtung verbundenen Steuereinrichtung , die das Scheinwerfersystem nach Massgabe der eingestellten Betriebsweise steuert.

Vor diesem Hintergrund besteht die Aufgabe der vorliegenden Erfindung darin, bei einem Kraftfahrzeug mit mehreren einstellbaren Betriebsmodi ein Scheinwerfersystem und ein Verfahren zu dessen Betreiben anzugeben, welche eine bessere Erkennbarkeit der Betriebsmodi bei einem Umschalten und dennoch eine sichere Betriebsweise ermöglichen.

Erfindungsgemäß wird diese Aufgabe durch ein Verfahren zum Betrieben eines Scheinwerfersystems mit den Merkmalen des Patentanspruchs 1 und/oder durch ein Scheinwerfersystem mit den Merkmalen des Patentanspruchs 12 gelöst.

Demgemäß ist ein Verfahren zum Betreiben eines Scheinwerfersystems in einem Kraftfahrzeug, mit den Schritten:
(a) Bereitstellen eines Scheinwerfers, der in einem ersten Betriebsmodus mit einem ersten Ansprechverhalten und in einem zweiten Betriebsmodus mit einem gegenüber dem ersten Ansprechverhalten unterschiedlichen zweiten Ansprechverhalten betreibbar ist, wobei einer der Betriebsmodi einen Normalbetriebsmodus oder einen Komfortbetriebsmodus und der jeweils andere Betriebsmodus einen Sportbetrieb bezeichnet und wobei der Scheinwerfer in einer Ausgangsposition den ersten Betriebsmodus aufweist;
(b) Umschalten von dem ersten Betriebsmodus in den zweiten Betriebsmodus, bei dem unmittelbar nach dem Umschalten das Ansprechverhalten beginnend von dem ersten Ansprechverhalten des erster Betriebsmodus über das zweite Arisprechverhalten des zweiten Betriebsmodus hinaus solange schnell verändert wird, bis ein drittes Ansprechverhalten erreicht ist;
(c) Langsames Rückgängigmachen des Ansprechverhaltens von dem dritten Ansprechverhalten solange, bis das zweite Ansprechverhalten für den zweiten Betriebsmodus erreicht ist.

Ein Scheinwerfersystem in einem Kraftfahrzeug ausgebildet ein erfindungsgemäßen Verfahren durchzuführen, mit mindestens einem Scheinwerfer, der in einem ersten Betriebsmodus mit einem ersten Ansprechverhalten und in einem zweiten Betriebsmodus mit einem gegenüber dem ersten Ansprechverhalten unterschiedlichen zweiten Ansprechverhalten betreibbar ist, mit einer Umschalteinrichtung zum Einschalten und/oder Umschalten des Betriebsmodus, mit einer mit der Umschalteinrichtung verbundenen Steuereinrichtung, die das Scheinwerfersystem nach Massgabe der eingestellten Betriebsweise steuert.

Die der vorliegenden Erfindung zugrunde liegende Erkenntnis besteht darin, dass bei einem Umschalten von einem Betriebsmodus auf den nächsten Betriebsmodus die sich dadurch ergebenden Auswirkungen auf das Scheinwerfersystem von dem Kraftfahrzeugführer vermutlich wohl kaum oder fast nicht wahrgenommen werden, sodass der Effekt einer derartigen Umschaltfunktionalität gewissermaßen, zumindest aus optischer Sicht, verpufft. Dies ist zumindest aus Marketing-technischen, jedoch auch aus vertriebstechnischen Gründen nachteilig, da die potentielle Käufergruppe eines Kraftfahrzeuges mit einer solchen Funktionalität eben auch einen entsprechend sichtbaren Beweis für ein solches zusätzliches Feature wünscht.

Die der vorliegenden Erfindung zugrunde liegende Idee besteht nun darin, bei einem Umschalten von einem ersten Betriebsmodus auf einen zweiten Betriebsmodus die sich dadurch ergebenden Änderungen des Ansprechverhaltens der Scheinwerfer gewissermaßen zu übersteuern und damit für den Kraftfahrzeugführer deutlicher nachvollziehbar und besser erkennbar zu machen. Das bedeutet, dass bei einem Umschaltvorgang von einem Betriebsmodus auf den nächsten, beispielsweise beim Umschalten von einem normalen Betriebsmodus auf einen Sportmodus, das Ansprechverhalten der Scheinwerfer deutlich über das für den Sportmodus vorgesehene Ansprechverhalten der Scheinwerfer hinaus erhöht wird, sodass dieses für den Kraftfahrzeugführer auch sichtbar wird. Damit erreicht man die gewünschte Wahrnehmung bei dem Kraftfahrzeugführer. Nach einer vorgegebenen Zeitdauer, die mehr oder weniger lang ausgebildet sein kann, wird das sehr hohe Ansprechverhalten sukzessiv wieder verringert, bis das Ansprechverhalten einen für einen Sportmodus vorgesehenen mittleren Wert erreicht hat. Denkbar wäre auch, wenn das Ansprechverhalten auf den Ausgangswert, also auf den Wert für den Normalbetrieb zurückkehrt. Diese Zeit kann beispielsweise so gewählt werden, dass nach dieser Zeitdauer erfahrungsgemäß der Fahrer sein Augenmerk wieder auf andere Eigenschaften des Kraftfahrzeuges sowie seine Fahrumgebung richtet. Bei der Dimensionierung dieser Zeitdauer kann auf Erfahrungswerte zurückgegriffen werden. Wesentlich ist hierbei, dass dieses Reduzieren des Ansprechverhaltens sehr langsam und zumindest deutlich langsamer als das Erhöhen des Ansprechverhaltens beim Umschalten auf den Sportmodus durchgeführt wird. Dieses langsame Reduzieren ist so langsam, dass diese Reduzierung des Ansprechverhaltens zumindest von dem Kraftfahrzeugführer nicht wahrnehmbar ist.

Wesentlich bei diesem Umschaltvorgang ist, dass das Ansprechverhalten sehr abrupt, d.h. schnell, erhöht bzw. abgesenkt wird, sodass dieses auch unmittelbar von dem Kraftfahrzeugführer wahrnehmbar ist.

Hat das Ansprechverhalten einen mittleren Wert erreicht, der dem zweiten Betriebsmodus zugewiesen ist, bleibt dieses Ansprechverhalten so lange konstant, bis wieder auf den ersten Betriebsmodus umgeschaltet wird. Dieser mittlere Wert kann auch dem Ausgangswert entsprechen.

Der besondere Vorteil der vorliegenden Erfindung besteht nun darin, dass einerseits ein Umschaltvorgang von dem ersten in einen zweiten Betriebsmodus, beispielsweise den Sportbetrieb, unmittelbar von dem Kraftfahrzeugführer auch erkannt wird, was insbesondere aus Marketing- und vertriebstechnischen Gründen besonders vorteilhaft ist. Andererseits ist es aus Ausleuchtungssicht empfehlenswert, das Ansprechverhalten der Scheinwerfer nicht zu groß und somit nicht zu aggressiv zu gestalten, was durch die Erfindung ebenfalls, nach einer gewissen Zeitdauer, gewährleistet ist. Somit wird beiden, Eingangs genannten Forderungen Rechnung getragen.

Vorteilhafte Ausgestalten und Weiterbildungen der Erfindung ergeben sich aus den weiteren Unteransprüchen sowie aus der Beschreibung unter Bezugnahme auf die Zeichnung.

In einer bevorzugten Ausgestaltung wird das zweite Ansprechverhalten nach dem Schritt (c) solange beibehalten, bis erneut ein Umschalten erfolgt.

In einer bevorzugten Ausgestaltung wird im Schritte (b) das dritte Ansprechverhalten für eine vorgegebene Zeitdauer beibehalten, wobei diese die Zeitdauer insbesondere so lang gewählt wird, dass innerhalb dieser Zeit die Wahrnehmung der Insassen des Kraftfahrzeuges bezogen auf die Ansprechverhalten der Scheinwerfer nachlässt.

In einer bevorzugten Ausgestaltung ist die schnelle Veränderung des Ansprechverhalten im Schritt (b) von dem ersten Ansprechverhalten, über das zweite Ansprechverhalten hinaus zu dem dritten Ansprechverhalten und die damit einhergehenden Auswirkungen auf das von den Scheinwerfern ausgestrahlte Licht von den Insassen des Kraftfahrzeuges wahrnehmbar.

In einer bevorzugten Ausgestaltung ist das langsame Rückgängigmachen des Ansprechverhalten im Schritt (c) von dem dritten Ansprechverhalten zum zweiten Ansprechverhalten und die damit einhergehenden Auswirkungen auf das von den Scheinwerfern ausgestrahlten Licht von den Insassen des Kraftfahrzeuges nicht wahrnehmbar.

In einer bevorzugten Ausgestaltung werden zur Einstellung des ersten und des zweiten Ansprechverhaltens die Bending-Funktion und/oder die Cornering-Funktion genutzt, indem deren Parameter je nach gewünschtem Ansprechverhalten geeignet verändert werden.

In einer bevorzugten Ausgestaltung wird die Veränderung des Ansprechverhaltens durch eine Veränderung der Ansteuerung eines Aktuators einer Verstelleinrichtung realisiert.

In einer bevorzugten Ausgestaltung werden die Scheinwerfer des Scheinwerfersystems im Normalbetrieb ruhig gehalten und vibrieren im Sportbetrieb innerhalb eines zugelassenen Bereichs bewusst.

In einer bevorzugten Ausgestaltung werden zur Einstellung des ersten und des zweiten Ansprechverhaltens die Helligkeit des abgestrahlten Lichts und/oder dessen Wellenlänge und/oder der abgestrahlte Lichtkegel verändert.

In einer bevorzugten Ausgestaltung wird mit dem Umschalten neben dem Scheinwerfersystem auch die Betriebsweise anderer Funktionseinheiten, zum Beispiel die Brennkraftmaschine, die Dämpfung, das Fahrwerk, verändert.

In einer bevorzugten Ausgestaltung werden der erste und zweite Betriebsmodus jeweils bei einem Abblendlicht oder Fahrlicht betrieben. Alternativ können diese auch während des Fernlichts betrieben werden.

In einer bevorzugten Ausgestaltung ist eine steuerbare Verstelleinrichtung vorgesehen, die abhängig von dem jeweiligen Ansprechverhalten eine Veränderung der Scheinwerfer vornimmt.

In einer bevorzugten Ausgestaltung weist das Scheinwerfersystem ein AFL-Scheinwerfersystem auf.

Die Erfindung wird nachfolgend anhand der in den Figuren der Zeichnung angegebenen Ausführungsbeispiele näher erläutert. Es zeigen dabei:
- Fig. 1: ein Blockschaltbild zur Darstellung eines ersten Ausführungsbeispiels des erfindungsgemäßes Verfahrens;
- Fig. 2: ein Ablaufdiagramm zur Erläuterung des erfindungsgemäßes Verfahrens aus Fig. 1;
- Fig. 3: ein Blockschaltbild zur Erläuterung eines zweiten Ausführungsbeispiels des erfindungsgemäßen Verfahrens;
- Fig. 4: ein Ablaufdiagramm zur Erläuterung des erfindungsgemäßen Verfahrens aus Fig. 3;
- Fig. 5: ein Blockschaltbild für ein erfindungsgemäßes Scheinwerfersystem.

In den Figuren der Zeichnung sind gleiche und funktionsgleiche Elemente, Merkmale und Signale - sofern nichts Anderes ausgeführt ist - mit denselben Bezugszeichen versehen worden.

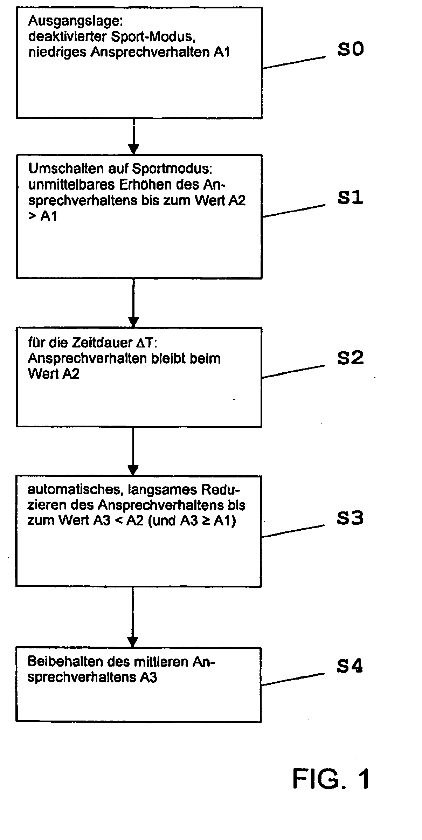

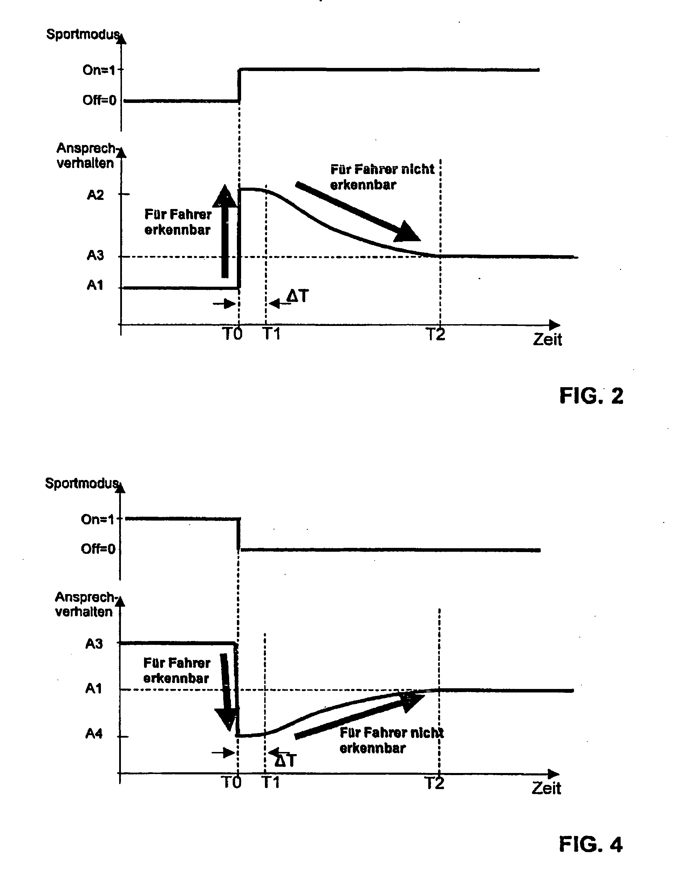

Nachfolgend sei anhand der beiden Figuren 1 und 2 ein erstes Ausführungsbeispiel eines erfindungsgemäßen Verfahrens zum Betreiben eines Scheinwerfersystems beschrieben. Gemäß dem ersten Ausführungsbeispiel des erfindungsgemäßen Verfahrens werden Funktionseinheiten des Kraftfahrzeugs von einem ersten Betriebsmodus in einen zweiten Betriebsmodus umgeschaltet. Der zweite Betriebsmodus bezeichnet dabei z. B. einen so genannten Sportbetriebsmodus, der ein sportlicheres, aggressiveres Verhalten zeigt oder dies zumindest simulieren soll. Der erste Betriebsmodus beschreibt z. B. einen Normalbetrieb oder Komfortbetrieb, bei dem also der Sportbetrieb deaktiviert ist.

Als Funktionseinheiten des Kraftfahrzeuges können hier die Stoßdämpfer, die Brennkraftmaschine, der Turbolader, das Fahrwerk, das Scheinwerfersystem und dergleichen vorgesehen sein. Im Falle eines Umschalten auf den Sportbetriebsmodus würde dies bedeuten, dass beispielsweise der Turbolader oder eine Stufe davon zugeschaltet werden, die Dämpfung und auch die Fahrwerkabstimmung härter abgestimmt werden, die Brennkraftmaschine ein unmittelbareres Ansprechverhalten zeigt, etc.

Die Erfindung bezieht sich nachfolgend auf eine als Scheinwerfer ausgebildete Funktionseinheit und auf die Auswirkung eines solchen Umschaltens auf deren Scheinwerfer. Dies sei zumindest anhand des ersten Ausführungsbeispiels in den Figuren 1 und 2 näher erläutert. Figur 1 zeigt dabei ein Ablaufdiagramm zur Erläuterung des ersten Ausführungsbeispiels des erfindungsgemäßen Verfahrens und Figur 2 zeigt das entsprechende Ablaufdiagramm.

In Figur 1 bezeichnet S0 die Ausgangsposition. Hier befindet sich das Kraftfahrzeug und somit dessen Scheinwerfersystem im normalen Betriebsmodus, bei dem also der Sportbetrieb deaktiviert ist. In dieser Situation ist das Ansprechverhalten A1 so gering, dass der Kraftfahrzeugfahrer das Ansprechen des Scheinwerfers nicht als solches erkennt, d. h. hier ist aus lichttechnischen Gründen eine ruhige, möglichst gleichmäßige Ausleuchtung durch den Scheinwerfer gewährleistet. Im Falle eines Kurvenlichtes schwenkt daher der Scheinwerfer eher träge und wenig abrupt mit dem Kurvenlicht mit.

In Schritt S1 zum Zeitpunkt T0 erfolgt ein Umschalten vom Normalbetrieb in den Sportbetrieb. Mit diesem Umschalten geht ein unmittelbares Erhöhen des Ansprechverhaltens einher. Dabei wird das Ansprechverhalten abrupt, d. h. sehr schnell, von dem geringen Ansprechverhalten A1 im Normalbetrieb auf ein hohes Ansprechverhalten A2 angehoben. Dieses hohe Ansprechverhalten A2 ist für den Kraftfahrzeugführer auch unmittelbar erkennbar. In der Figur 2 erfolgt das Erhöhen des Ansprechverhaltens im Schritt S1 ohne Zeitverlust, wobei es sich von selbst versteht, dass hierfür natürlich eine gewisse Zeit benötigt wird, die hier in Figur 2 nicht dargestellt ist.

Anschließend, d. h. im Schritt S3, bleibt dieses hohe Ansprechverhalten A2 zunächst für eine Zeitdauer ΔT aufrecht erhalten, bei der die Wahrnehmung des Kraftfahrzeugführers auf dieses hohe Ansprechverhalten gerichtet bleibt. Der Kraftfahrzeugführer assoziiert dieses hohe, für ihn erkennbare Ansprechverhalten der Scheinwerfer unmittelbar mit dem im Schritt S1 von ihm selbst eingestellten Sportmodus. Dieses hohe Ansprechverhalten bleibt bis zum Zeitpunkt T1, d. h. für die Dauer ΔT = T1 - T0, erhalten.

Anschließend (Schritt S4), d. h. ab dem Zeitpunkt T1, erfolgt automatisch, d. h. ohne ein eigens dafür vorgesehenes Betätigen durch den Kraftfahrzeugführer, ein langsames, sukzessives Absenken des Ansprechverhaltens der Scheinwerfer des Scheinwerfersystems. Dieses langsame Absenken des Ansprechverhaltens ist so dimensioniert, dass es für den Kraftfahrzeugführer nicht erkennbar ist, sodass er nach wie vor der Auffassung ist, dass der Sportmodus und das von ihm damit in Verbindung gebrachte hohe Ansprechverhalten eingestellt ist. Dieses langsame Absenken ist so dimensioniert, dass der Kraftfahrzeugführer dieses nicht wahrnimmt und aufgrund von Gewohnheitseffekten des Auges eine solche stetige, relativ langsame Reduzierung des Ansprechverhaltens bzw. der entsprechenden Auswirkungen der Scheinwerfer für den Kraftfahrzeugführer auch nicht erkennbar ist. Dieses langsame Reduzieren des Ansprechverhalten wird bis zum Zeitpunkt T2, bei dem das Ansprechverhalten einen mittleren Wert A3 erreicht hat, fortgeführt. Dieser mittlere Wert A3 des Ansprechverhaltens ist dabei so dimensioniert, dass das Ansprechverhalten hier geringer ist als das hohe Ansprechverhalten A2 und höher oder zumindest gleich ist als das niedrige Ansprechverhalten A1.

Nach dem Zeitpunkt T2, d. h. bei Erreichen des mittleren Ansprechverhaltens A3, verbleibt das Ansprechverhalten auf diesem mittleren Wert A3 so lange, bis wieder eine entsprechende Änderung der Betriebsweise des Kraftfahrzeugs eingestellt wird.

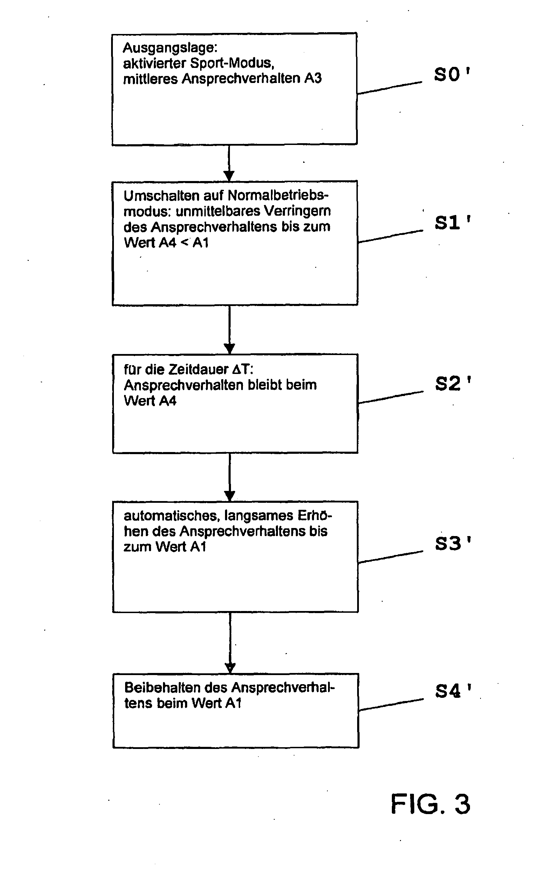

Nachfolgend sei anhand der Figuren 3 und 4 ein zweites Ausführungsbeispiel des erfindungsgemäßen Verfahrens beschrieben. Im Unterschied zu dem anhand der Figuren 1 und 2 beschriebenen ersten Ausführungsbeispiel soll hier der Sportmodus deaktiviert werden, d. h. hier soll von dem zweiten Betriebsmodus zurück in den ersten Betriebsmodus, also in den Normalbetriebsmodus, umgeschaltet werden. Das entsprechende Verfahren erfolgt hier ähnlich wie das erste Verfahren.

In der Ausgangsposition S0' ist der Sportmodus aktiviert, wobei sich hier ein mittleres Ansprechverhalten A3 eingestellt hat.

Zum Zeitpunkt T0' wird der Sportmodus deaktiviert (S1'). Es erfolgt hier eine unmittelbare Verringerung des Ansprechverhaltens, bis ein sehr niedriges Ansprechverhalten A4 erreicht ist. Dieses sehr niedrige Ansprechverhalten A4 ist zumindest geringer als das niedrige Ansprechverhalten A1, welches für den Normalbetrieb vorgesehen ist. Dieses unmittelbare, abrupte Verringern des Ansprechverhaltens und die damit verbundenen Auswirkungen auf das Scheinwerfersystem ist für den Kraftfahrzeugführer erkennbar.

Auch hier (Schritt S2') erfolgt für die Zeitdauer Δ*T*= *T1'-T0'* ein Beibehalten dieses sehr niedrigen Ansprechverhaltens A4.

Nach Erreichen des Zeitpunktes T1' (Schritt S3') erfolgt automatisch eine langsame, sukzessive und für den Kraftfahrzeugführer nicht erkennbare Erhöhung des Ansprechverhaltens so lange, bis das niedrige Ansprechverhalten A1, welches dem Normalbetrieb zugeordnet ist, erreicht ist. Dies ist zum Zeitpunkt T2' gegeben.

Anschließend (S4'), d. h. nach dem Zeitpunkt T2', ist ein niedriges Ansprechverhalten eingestellt.

Wesentlich ist an dem erfindungsgemäßen Verfahren, wie es anhand der Figuren 1 und 2 (erstes Ausführungsbeispiel) und der Figuren 3 und 4 (zweites Ausführungsbeispiel) beschrieben ist, dass im Schritt S1, S1' eine unmittelbare Veränderung des Ansprechverhaltens auf einen Wert A2, A4 vorgenommen wird, dessen Auswirkungen auf das Scheinwerfersystem von dem Kraftfahrzeugführer auch erkannt werden. Dieses für den Fachmann zu erkennende, geänderte Ansprechverhalten verbleibt anschließend für eine gewisse Zeitdauer ΔT erhalten. Wesentlich ist ferner, dass im Anschluss an diese Zeitdauer ΔT oder u. U. auch bereits unmittelbar nach dem Umschalten zum Zeitpunkt T1 eine langsame, für den Kraftfahrzeugführer nun nicht mehr wahrnehmbare Veränderung des Ansprechverhaltens auf einen solchen Wert vorgenommen wird, der für den jeweils gewünschten Betriebsmodus vorgesehen ist.

Zur Realisierung der Funktionalitäten eines geringen und eines hohen Ansprechverhaltens können mehrere Einstellungen des Scheinwerfersystems vorgesehen sein, die nachfolgend lediglich beispielhaft, z. B. nicht vollumfänglich und abschließend, beschrieben werden sollen:
- Verfügt das Scheinwerfersystem z. B. über eine so genannte Bending-Funktion, kann ein hohes Ansprechverhalten beispielsweise vorsehen, dass das Licht des Scheinwerfers sehr schnell und abrupt mit dem Lenkrad mitgeschwenkt wird. Dieses Verschwenken wird z. B. durch eine harte Kopplung des Scheinwerfers mit der entsprechenden Verstelleinrichtung zur Verstellung der Scheinwerfer realisiert. Im Falle eines geringen Ansprechverhalten ist hier ein träges, eher langsames Mitschwenken vorgesehen, welches für den Kraftfahrzeugführer auch als ruhigere Ausleuchtung empfunden wird.
- Scheinwerfersysteme mit einer so genannten Cornering-Funktionalität weisen einen zusätzlichen Scheinwerfer im seitlichen Randbereich auf, der ab einem bestimmten Lenkwinkel und/oder bei Betätigung des Blinkers eingeschaltet werden kann und der bei einer Kurvenfahrt eine bessere Kurvenausleuchtung ermöglicht. Im Falle eines hohen Ansprechverhaltens kann vorgesehen sein, dass dieser Lenkwinkel kleiner ist, während er bei einem niedrigen Ansprechverhalten eher größer gewählt ist.
- Darüber hinaus kann auch vorgesehen sein, dass die Scheinwerfer des Scheinwerfersystems im Normalbetrieb ruhig gehalten werden und im Sportbetrieb bewusst etwas flackern, was ein gewisses sportliches, aggressives Fahrverhalten simulieren soll. Dies kann beispielsweise durch die mechanische Verstelleinrichtung des Scheinwerfersystems durch kurze mechanische Stöße gegen das Gehäuse der Lichter eingestellt werden. Dem Fahrer wird so vermittelt, dass beispielsweise aufgrund einer härteren Abstimmung des Fahrwerkes und der Dämpfung damit auch ein Flackern der Scheinwerfer einhergeht.
- Denkbar wäre auch, dass bei einem hohen Ansprechverhalten die Lichter des Scheinwerfers helleres Licht und/oder Licht mit einer anderen Wellenlänge gegenüber dem Betriebsmodus mit niedrigem Ansprechverhalten abstrahlen. Beispielsweise wäre denkbar, dass bei einem hohen Ansprechverhalten sehr weißes oder etwa auch leicht bläuliches Licht ausgestrahlt wird, während bei einem niedrigen Ansprechverhalten wärmer empfundenes Licht, beispielsweise Licht mit gelben Lichtwellen anteilen abgestrahlt wird.
- Denkbar wäre ferner, dass bei einem hohen Ansprechverhalten der von dem Licht abgestrahlt Lichtkegel einen weiteren Bereich ausleuchtet, beispielsweise einen weiteren Winkelbereich ausleuchtet, als bei einem niedrigen Ansprechverhalten.

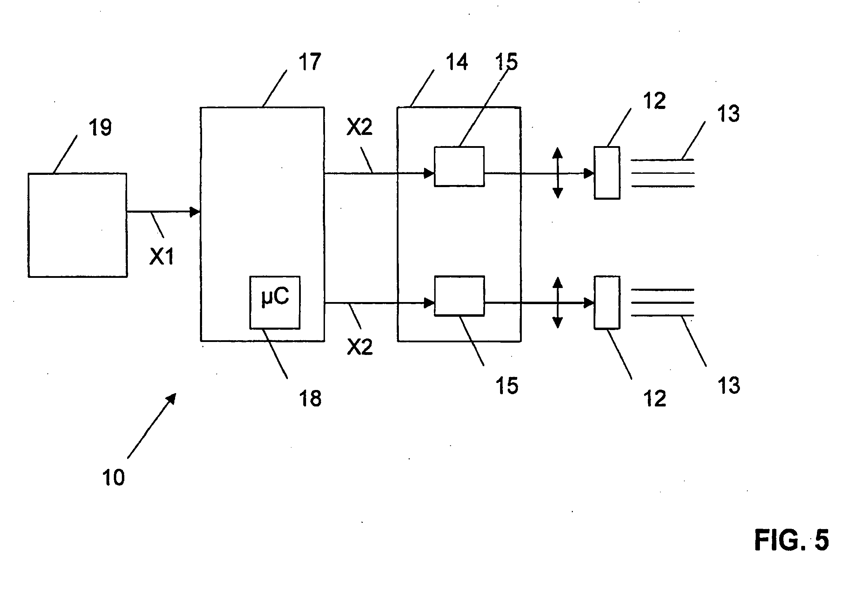

Nachfolgend wird anhand des Blockschaltbildes in der Figur 5 ein Ausführungsbeispiel für ein erfindungsgemäßes Scheinwerfersystem erläutert.

Das Scheinwerfersystem ist hier mit Bezugszeichen 10 bezeichnet. Dieses Scheinwerfersystem 10 ist in einem hier nicht dargestellten Kraftfahrzeug implementiert und z. B. als AFL-Scheinwerfersystem ausgebildet. Das Scheinwerfersystem 10 enthält im vorliegenden Ausführungsbeispiel zwei Scheinwerfer 12. Die Scheinwerfer 12 emittieren Lichtstrahlen 13. Die Scheinwerfer 12 sind verstellbar ausgebildet, was durch die gekrümmten Pfeile angedeutet ist. Zur Verstellung der Scheinwerfer 12 ist eine Verstelleinrichtung 14 vorgesehen. Die Verstelleinrichtung 14 weist Verstelleinheiten 15 auf. Mittels dieser Verstelleinrichtung 14 ist eine Leuchtweitenregelung, eine Kurvenlichteinstellung, eine Winkeleinstellung des ausgestrahlten Lichts, etc. einstellbar.

Zur Steuerung der Verstelleinrichtung 14 ist eine Steuervorrichtung 17 vorgesehen. Diese Steuervorrichtung 17 enthält einen Mikroprozessor 18 und kann z. B. Bestandteil eines Steuergerätes im Kraftfahrzeug sein, z. B. des Steuergerätes für die Lichtsteuerung.

Ferner ist eine Umschaltvorrichtung 19 vorgesehen, welche mit der Steuervorrichtung 17 verbunden ist. Mittels dieser Umschalteinrichtung 19 ist durch den Kraftfahrzeugführer oder einem Insassen zumindest ein erster Betriebsmodus und ein zweiter Betriebsmodus des Kraftfahrzeuges einstellbar. Im Falle eines Umschaltens der Umschalteinrichtung 19 wird dies der Steuereinrichtung 17 durch ein Steuersignal X1 signalisiert. Die Steuereinrichtung 17 steuert nun mittels Steuersignale X2 die Verstelleinrichtung 14 des Scheinwerfersystems 10 beispielsweise mittels eines anhand der Figuren 1-4 erläuterten ersten oder zweiten erfindungsgemäßen Verfahrens.

Obgleich die vorliegende Erfindung vorstehend anhand eines bevorzugten Ausführungsbeispiels beschrieben wurde, sei sie nicht darauf beschränkt, sondern lässt sich auf mannigfaltige Art und Weise modifizieren.

Es versteht sich von selbst, dass die Scheinwerfer des Scheinwerfersystems auch gesondert in ihrer Betriebsweise eingestellt werden können, d. h. in diesem Falle wäre das Ansprechverhalten der Scheinwerfer nicht notwendigerweise an die Betriebsweise anderer Funktionseinheiten des Kraftfahrzeuges, wie z. B. der Brennkraftmaschine, der Dämpfung, des Fahrwerks, etc., gekoppelt.

So sei die Erfindung nicht notwendigerweise auf ein als AFL-Scheinwerfersystem ausgebildetes Scheinwerfersystem beschränkt, sondern lässt sich auf beliebigen Scheinwerfersystemen erweitern.

Auch sei die Erfindung nicht notwendigerweise auf ein Personenkraftfahrzeug beschränkt, sondern lässt sich auch bei anderen Kraftfahrzeugen einsetzen, auch wenn dies häufig nicht gewünscht ist. Allerdings wäre die Erfindung selbstverständlich auch bei Motorrädern oder sonstigen Zweiradkraftfahrzeugen vorteilhaft einsetzbar.

### Bezugszeichenliste

- 10: Scheinwerfersystem
- 12: Scheinwerfer
- 13: ausgestrahltes Licht
- 14: Verstelleinrichtung
- 15: Verstelleinheiten
- 17: Steuervorrichtung
- 18: Mikroprozessor
- 19: Umschalteinrichtung

- A1-A4: Werte für das Ansprechverhalten
- S0-S5, S0'-S5': Verfahrensschritte
- T0-T2, T0 '-T2 ': Zeitpunkte
- ΔT: Zeitdauer
- X1, X2: Steuersignale

## Patentansprüche

1. Verfahren zum Betreiben eines Scheinwerfersystems (10) in einem Kraftfahrzeug, mit den Schritten:
(a) Bereitstellen eines Scheinwerfers, der in einem ersten Betriebsmodus mit einem ersten Ansprechverhalten und in einem zweiten Betriebsmodus mit einem gegenüber dem ersten Ansprechverhalten unterschiedlichen zweiten Ansprechverhalten betreibbar ist, wobei einer der Betriebsmodi einen Normalbetriebsmodus oder einen Komfortbetriebsmodus und der jeweils andere Betriebsmodus einen Sportbetrieb bezeichnet und wobei der Scheinwerfer in einer Ausgangsposition den ersten Betriebsmodus aufweist;
(b) Umschalten von dem ersten Betriebsmodus in den zweiten Betriebsmodus, bei dem unmittelbar nach dem Umschalten das Ansprechverhalten beginnend von dem ersten Ansprechverhalten des erster Betriebsmodus über das zweite Ansprechverhalten des zweiten Betriebsmodus hinaus solange schnell verändert wird, bis ein drittes Ansprechverhalten erreicht ist;
(c) Langsames Rückgängigmachen des Ansprechverhaltens von dem dritten Ansprechverhalten solange, bis das zweite Ansprechverhalten für den zweiten Betriebsmodus erreicht ist.

2. Verfahren nach Anspruch 1, **dadurch gekennzeichnet, dass** das zweite Ansprechverhalten nach dem Schritt (c) solange beibehalten wird, bis erneut ein Umschalten erfolgt.

3. Verfahren nach einem der vorherigen Ansprüche, **dadurch gekennzeichnet, dass** im Schritt (b) nach Erreichen des dritten Ansprechverhaltens diese für eine vorgegebene Zeitdauer (ΔT) beibehalten wird, wobei diese die Zeitdauer (ΔT) insbesondere so lang gewählt wird, dass innerhalb dieser Zeitdauer (ΔT) die Wahrnehmung der Insassen des Kraftfahrzeuges bezogen auf das aktuelle Ansprechverhalten der Scheinwerfer (12) nachgelassen hat oder nicht mehr vorhanden ist.

4. Verfahren nach einem der vorherigen Ansprüche, **dadurch gekennzeichnet, dass** das schnelle Verändern des Ansprechverhalten im Schritt (b) und die damit einhergehenden Auswirkungen auf das von den Scheinwerfern ausgestrahlte Licht von den Insassen des Kraftfahrzeuges wahrnehmbar ist.

5. Verfahren nach einem der vorherigen Ansprüche, **dadurch gekennzeichnet, dass** das langsame Rückgängigmachen des Ansprechverhaltens im Schritt (c) von dem dritten Ansprechverhalten zum zweiten Ansprechverhalten und die damit einhergehenden Auswirkungen auf das von den Scheinwerfern ausgestrahlten Licht von den Insassen des Kraftfahrzeuges nicht wahrnehmbar sind.

6. Verfahren nach einem der vorherigen Ansprüche, **dadurch gekennzeichnet, dass** zur Einstellung des ersten, zweiten und/oder dritten Ansprechverhaltens die Bending-Funktion und/oder die Cornering-Funktion genutzt werden, indem deren Parameter je nach gewünschtem Ansprechverhalten geeignet verändert werden.

7. Verfahren nach einem der vorherigen Ansprüche, **dadurch gekennzeichnet, dass** die Veränderung des Ansprechverhaltens durch eine Veränderung der Ansteuerung eines Aktuators einer Verstelleinrichtung (14) des Scheinwerfersystems (10) realisiert wird.

8. Verfahren nach einem der vorherigen Ansprüche, **dadurch gekennzeichnet, dass** die Scheinwerfer (12) des Scheinwerfersystems (10) im Normalbetrieb ruhig gehalten werden und im Sportbetrieb innerhalb eines zugelassenen Bereichs bewusst vibrieren.

9. Verfahren nach einem der vorherigen Ansprüche, **dadurch gekennzeichnet, dass** zur Einstellung des ersten, zweiten und/oder dritten Ansprechverhaltens die Helligkeit des abgestrahlten Lichts und/oder dessen Wellenlänge und/oder der abgestrahlte Lichtkegel verändert wird/werden.

10. Verfahren nach einem der vorherigen Ansprüche, **dadurch gekennzeichnet, dass** mit dem Umschalten der Betriebsmodi neben dem Scheinwerfersystem (10) auch die Betriebsweise anderer Funktionseinheiten, zum Beispiel die Brennkraftmaschine, die Dämpfung, das Fahrwerk, veränderbar sind.

11. Verfahren nach einem der vorherigen Ansprüche, **dadurch gekennzeichnet, dass** der erste und zweite Betriebsmodus jeweils zusammen bei einem eingestellten Abblendlicht oder Fahrlicht des Kraftfahrzeuges betrieben werden.

12. Scheinwerfersystem (10) in einem Kraftfahrzeug ausgebildet ein Verfahren nach einem der vorherigen Ansprüche durch zuführen,
- mit mindestens einem Scheinwerfer, der in einem ersten Betriebsmodus mit einem ersten Ansprechverhalten und in einem zweiten Betriebsmodus mit einem gegenüber dem ersten Ansprechverhalten unterschiedlichen zweiten Ansprechverhalten betreibbar ist,
- mit einer Umschalteinrichtung (19) zum Einschalten und/oder Umschalten des Betriebsmodus,
- mit einer mit der Umschalteinrichtung (19) verbundenen Steuereinrichtung (17), die das Scheinwerfersystem (10) nach Massgabe der eingestellten Betriebsweise steuert.

13. Scheinwerfersystem (10) nach Anspruch 12, **dadurch gekennzeichnet, dass** eine steuerbare Verstelleinrichtung (14) vorgesehen ist, die abhängig von dem jeweiligen Ansprechverhalten eine Veränderung der Scheinwerfer (12) vornimmt.

14. Scheinwerfersystem (10) nach Anspruch 12 oder 13, **dadurch gekennzeichnet, dass** das Scheinwerfersystem (10) ein AFL-Scheinwerfersystem (10) aufweist.

## Claims

1. A method for operating a headlight system (10) in a motor vehicle, comprising the following steps:
(a) providing a headlight which can be operated in a first operating mode with a first response behavior and in a second operating mode with a second response behavior that differs from the first response behavior, with one of the operating modes designating a normal operating mode or a comfort operating mode and the respective other operating mode designating sports operation, and with the headlight having the first operating mode in an initial position;
(b) changeover from the first operating mode to the second operating mode, in which directly after the changeover the response behavior is changed rapidly starting from the first response behavior of the first operating mode via the second response behavior of the second operating mode until a third response behavior is reached;
(c) slow reversal of the response behavior from the third response behavior for such a time until the second response behavior for the second operating mode has been reached.

2. A method according to claim 1, **characterized in that** the second response behavior after the step (c) is maintained for such a time until there is a renewed changeover.

3. A method according to one of the preceding claims, **characterized in that** in step (b) after reaching the third response behavior it is maintained for a predetermined duration (ΔT), with said duration (ΔT) especially being chosen for such a length that within said duration (ΔT) the perception of the passengers of the motor vehicle has decreased or is no longer present concerning the current response behavior of the headlights (12).

4. A method according to one of the preceding claims, **characterized in that** the rapid change of the response behavior in step (b) and the concomitant effects on the light emitted by the headlights can be perceived by the passengers of the motor vehicle.

5. A method according to one of the preceding claims, **characterized in that** the slow reversal of the response behavior in step (c) from the third response behavior to the second response behavior and the concomitant effects on the light emitted by the headlights cannot be perceived by the passengers of the motor vehicle.

6. A method according to one of the preceding claims, **characterized in that** the bending function and/or the cornering function can be used for setting the first, second and/or third response behavior, **in that** their parameters are suitably changed according to the desired response behavior.

7. A method according to one of the preceding claims, **characterized in that** the change in the response behavior is realized by a change in triggering an actuator of an adjusting device (14) of the headlight system (10).

8. A method according to one of the preceding claims, **characterized in that** the headlights (12) of the headlight system (10) are held quietly in normal operation, and intentionally vibrate within a permitted range in sports operation.

9. A method according to one of the preceding claims, **characterized in that** for setting the first, second and/or third response behavior the brightness of the emitted light and/or its wavelength and/or the emitted light beam is/are changed.

10. A method according to one of the preceding claims, **characterized in that** with the changeover of the operating modes the operating mode of other functional units such as the internal combustion engine, the damping, the chassis can be changed in addition to the headlight system (10).

11. A method according to one of the preceding claims, **characterized in that** the first and second operating mode are operated jointly in a set low-beam light or driving light of the motor vehicle.

12. A headlight system (10) in a motor vehicle arranged for performing a method according to one of the preceding claims, comprising
- at least one headlight which can be operated in a first operating mode with a first response behavior and in a second operating mode with a second response behavior which differs from the first response behavior;
- a changeover device (19) for activating and/or switching the operating mode;
- a control device (17) connected with the changeover device (19) which controls the headlight system (10) according to the set operating mode.

13. A headlight system (10) according to claim 12, **characterized in that** a controllable adjusting device (14) is provided which changes the headlights (12) depending on the respective response behavior.

14. A headlight system (10) according to claim 12 or 13, **characterized in that** the headlight system (10) comprises an AFL headlight system (10).

## Revendications

1. Procédé pour faire fonctionner un système de projecteurs (10) dans un véhicule à moteur, comprenant les étapes de :
(a) fourniture d'un projecteur qui peut fonctionner dans un premier mode de fonctionnement avec un premier comportement de réponse et dans un deuxième mode de fonctionnement avec un deuxième comportement de réponse différent du premier comportement de réponse, l'un des modes de fonctionnement désignant un mode de fonctionnement normal ou un mode de fonctionnement de confort et l'autre mode de fonctionnement un mode sportif, le projecteur présentant dans une position initiale le premier mode de fonctionnement ;
(b) commutation du premier mode de fonctionnement au deuxième mode de fonctionnement, le comportement de réponse étant modifié rapidement, immédiatement après la commutation, à partir du premier comportement de réponse du premier mode de comportement et au-delà du deuxième comportement de réponse du deuxième mode de fonctionnement jusqu'à ce qu'un troisième comportement de réponse soit atteint ;
(c) régression lente du comportement de réponse à partir du troisième comportement de réponse jusqu'à ce que le deuxième comportement de réponse pour le deuxième mode de fonctionnement soit atteint.

2. Procédé selon la revendication 1, **caractérisé en ce que** le deuxième comportement de réponse est maintenu après l'étape (c) jusqu'à ce qu'une nouvelle commutation se produise.

3. Procédé selon l'une des revendications précédentes, **caractérisé en ce que** dans l'étape (b), après que le troisième comportement de réponse a été atteint, il est maintenu pendant une durée prédéterminée (ΔT), laquelle durée (ΔT) est choisie en particulier assez longue pour que pendant cette durée (ΔT), la perception par les occupants du véhicule à moteur du comportement de réponse actuel des projecteurs (12) se soit atténuée ou qu'il n'y en ait plus.

4. Procédé selon l'une des revendications précédentes, **caractérisé en ce que** le changement rapide du comportement de réponse dans l'étape (b) et ses effets sur la lumière émise par les projecteurs sont perceptibles par les occupants du véhicule à moteur.

5. Procédé selon l'une des revendications précédentes, **caractérisé en ce que** la régression lente du comportement de réponse du troisième comportement de réponse au deuxième comportement de réponse dans l'étape (c) et ses effets sur la lumière émise par les projecteurs ne sont pas perceptibles par les occupants du véhicule à moteur.

6. Procédé selon l'une des revendications précédentes, **caractérisé en ce que** pour régler les premier, deuxième et/ou troisième comportements de réponse, on utilise la fonction d'éclairage adaptatif en virage (*bending*) et/ou la fonction d'éclairage directionnel automatique (*cornering*) en modifiant les paramètres de celles-ci selon le comportement de réponse souhaité.

7. Procédé selon l'une des revendications précédentes, **caractérisé en ce que** le changement du comportement de réponse est réalisé par un changement de l'activation d'un actionneur d'un dispositif de réglage (14) du système de projecteurs (10).

8. Procédé selon l'une des revendications précédentes, **caractérisé en ce que** les projecteurs (12) du système de projecteurs (10) sont retenus en fonctionnement normal et vibrent volontairement dans une plage autorisée dans le mode sportif.

9. Procédé selon l'une des revendications précédentes, **caractérisé en ce que** pour régler les premier, deuxième et/ou troisième comportements de réponse, l'intensité de la lumière émise et/ou sa longueur d'onde et/ou le cône de lumière émis sont modifiés.

10. Procédé selon l'une des revendications précédentes, **caractérisé en ce que** le mode de fonctionnement d'autres unités fonctionnelles, outre le système de projecteurs (10), peut être modifié avec la commutation des modes de fonctionnement, par exemple le moteur à combustion interne, l'amortissement, le châssis.

11. Procédé selon l'une des revendications précédentes, **caractérisé en ce que** le premier mode de fonctionnement et le deuxième sont utilisés chacun en même temps que les feux de croisement ou les feux longue portée du véhicule à moteur sont réglés.

12. Système de projecteurs (10) dans un véhicule à moteur conçu pour mettre en oeuvre un procédé selon l'une des revendications précédentes,
- avec au moins un projecteur qui peut fonctionner dans un mode de fonctionnement avec un premier comportement de réponse et dans un deuxième mode de fonctionnement avec un deuxième comportement de réponse différent du premier comportement de réponse,
- avec un dispositif de commutation (19) pour activer et/ou commuter le mode de fonctionnement,
- avec une installation de commande (17) reliée au dispositif de commutation (19), qui commande le système de projecteurs (10) en fonction du mode de fonctionnement réglé.

13. Système de projecteurs (10) selon la revendication 12, **caractérisé en ce qu'**il est prévu un dispositif de réglage contrôlable (14) qui réalise une modification des projecteurs (12) en fonction du comportement de réponse.

14. Système de projecteurs (10) selon la revendication 12 ou 13, **caractérisé en ce que** le système de projecteurs (10) présente un système de projecteurs AFL (10).
